# EUROPEAN PATENT APPLICATION

(11) **EP 3 550 510 A1**
(43) Date of publication of application: **09.10.2019**
(21) Application number: 19164050.7
(22) Date of filing: 20.03.2019
(51) Int. Cl.: G06T 5/50, G06T 11/00

(54) **METHOD FOR PRODUCING IMAGE OF BIOLOGICAL SAMPLE AND OPTICAL SYSTEM USING SAME**

(30) Priority: 03.04.2018 TW 107111815
(71) Applicant: AcuSolutions Inc., Apia (WS)
(72) Inventor: HSU, Kuang-Yu, Taipei (TW); TSAI, Chien-Chung, Taipei (TW); LIN, Sey-En, Taipei (TW)
(74) Representative: Strehl Schübel-Hopf & Partner

(57) **Abstract**

A method for producing image of biological sample, including steps: inputting a grayscale reflection image or a grayscale interference image of a biological sample into a first memory block; inputting a grayscale fluorescent image of the biological sample into a second memory block; using an information processing apparatus to convert the grayscale reflection image or the grayscale interference image into an RGB reflection image or an RGB interference image via first color transform operation and using the information processing apparatus to convert the grayscale fluorescent image into an RGB fluorescent image via second color transform operation; using the information processing apparatus to perform an image fusion operation and an intensity inversion operation on the RGB reflection image and the RGB fluorescent image or on the RGB interference image and the RGB fluorescent image to generate a pseudo H&E image; and outputting the pseudo H&E image to a display unit.

## Description

### BACKGROUND OF THE INVENTION

### Field of the Invention

The present invention relates to a method for producing image of an optical system, especially an optical sectioning apparatus in which optical coherence tomography (OCT) or a laser scanning confocal microscopy (LSCM) is adopted, in the use of in vivo tissue image detection or tissue/cell pattern recognition before the storage of biobank tissues.

### Description of the Related Art

In vivo tissues refer to the tissues without ex vivo, which are considered to be the most consistent, natural, and primitive state of the human body. In general, due to outpatient needs, it is often needed to use tools for visual inspection on patients to track changes in the tissues. Among the tools currently in use, ultrasound has higher resolution to confirm the depth of the centimeter grade of internal tissue changes. It can roughly determine high and low density of the tissues to infer the probability of good or bad tissues in the use of statistical data.

However, when it is needed to provide surgeons with further precision the differentiation degree of abnormal tissue tissue surface during surgery to decide if the surgery should be continued, without pathological image, the purpose of cytopathological grade diagnosis still cannot be achieved. In the quick practice nowadays, the tissues removed in operation are subjected to cryopathological sectioning, which has shortcomings such as time consuming, difficulties in cutting out the whole face, over-dyeing, and easily to be damaged by frost. Therefore, in vivo tissue imaging can provide more precise cell-level pathology information before surgery (such as dermatological tumor cell tissue confirmation) or intraoperation (such as breast cancer tumor clearance surgery).

A biobank is the human biological material in a centralized method at low temperatures or in a suitable storage environment to store a variety of human ex vivo, which can aid clinical disease diagnosis and treatment and biological application systems for life science research at the right time. Biological samples and related data of the biobank can provide verification solutions for samples and ensure the accuracy of their samples.

Ex vivo block tissues account for the bulk of human biological materials; the examiner first confirms the types, patterns, and activities of the cells in the tissues before using the tissues. When the biobank is provided to the academic unit or the downstream user for biological tests, quality assurance and quality control are important indicators for the success rate of samples.

Cooling rates and methods in storing samples have major impacts on cell viability. In other words, they affect the quality of the sample and determine the possibility of using the sample later. Before storage, it is needed to confirm if block tissues contain target tissues or target cells. Currently, the way to confirm the cells in tissues is mainly by cryosectioning before staining. In the process of cryosectioning, crystal ice produced after freezing samples with moisture will destroy the tissue structure. At the frozen temperature (∼-20°C) of general tissues, adipose tissues of more fat samples have not been frozen and cured so that they may fall off from the slice easily, making slice tissue identification incomplete. Therefore, before the sample is put into storage, if it goes through cryosectioning and is warmed up again, it will cause a certain degree of damage to the sample before storage at low temperatures.

Non-destructive tissue imaging, according to resolution and scanning depth, can be divided into computerized tomography, nuclear magnetic resonance, ultrasound, and optical reflection imaging. At present, only optical reflection imaging can detect the cellular structure in the in vivo tissues.

The mainstream of optical reflection imaging technology is optical interference microscopy (OIM) and reflectance confocal microscopy (RCM), which is an emerging optical imaging technology in recent years. Its resolution is up to the cell level, in which the sample is imaged and resolved based on the difference of reflection, absorption and scattering abilities of light in various tissues as well as principles of optical interference. Because it can directly scan the tissues at room temperature (4∼25 °C) and there is no need to perform cryosectioning staining and other freezing procedures, it can avoid crystal ice or morphological artifacts in excessive moisture or fatty tissues during cryosection to maintain the integrity of the tissue sample. In the use of in vivo tissue imaging or confirmation of tissue cell pattern recognition before biobank storage, except for capturing images without destroying tissues, it can let doctors to recognize images and receive images faster because of its pseudo H&E imagery.

In the literature, Daniel Dorr et al. proposed scan Raman microscopy with image characteristics of scanning tissues. This method can scan the chemical composition of the formation of the tissues. But it cannot describe the structural characteristics of the tissues. P. A. Keane et al. used the principle of interference to apply optical coherence tomography to the biobank of ophthalmology. But due to insufficient resolution, the scope of application is only applicable to the retinal stratification of in vivo ophthalmology. J. Georges et al. used reflectance confocal microscopy (RCM) to scan the patterns of the tissues (containing cell structure and nucleus). However, since the method for producing image of transform mechanism of the biological sample has not been used, it is difficult for physicians to identify and read tissue contents.

The conventional technique, like the US patent US8269827B2 "System and methods for mapping fluorescent images into a bright field color space", reveals a kind of method for producing image of generating a biological sample in the use of fluorescent images, comprising steps of: obtaining two or more fluorescent images of the fixed area on the sample; converting image data of the fluorescent image into bright field color space by mapping parameters; and producing bright-field images to further generate the bright field image similar to an H&E image.

The patent structure produces pseudo H&E images in the use of multiple fluorescent images through color addition. However, since the fluorescent agent used to generate the fluorescent image inevitably still causes damage to the sample tissues and the color contrast of the pseudo H&E image still needs to be improved, there is a need in the art for a novel method in producing image of synthesizing biological samples.

### SUMMARY OF THE INVENTION

One objective of the present invention is to disclose a method for producing image of a biological sample, in which a reflection image and a fluorescent image, or an interference image and a fluorescent image are generated by performing color transform operations, image fusion operations and intensity inversion operations to provide a better contrast of biological samples and thus improve image identifiability and readability.

Another objective of the present invention is to disclose a method for producing image of a biological sample, which can reduce more use of fluorescent agents and the damage caused by the fluorescent agent on the sample tissues compared to conventional technology in the use of multiple fluorescence image additions.

Another objective of the present invention is to disclose a method for producing image of a biological sample, which can shorten the dyeing time and thus speed up the acquisition of images due to the reduction in the use of fluorescent agents.

Another objective of the present invention is to disclose a method for producing image of a biological sample, in which instant images can be obtained without destroying the tissues by using image detection for in vivo tissues.

Still another objective of the present invention is to disclose a method for producing image of a biological sample, which can improve the correctness of the sample before it is put into storage by first confirming if target tissues or cells are included in test tissues in fresh tissues image recognition in the biobank and also avoid sample freezing and reduce the risk of defective product output after delivery.

For the aforementioned purposes, a method for producing image of a biological sample is proposed, comprising steps of: inputting a grayscale reflection image or a grayscale interference image of a biological sample into a first memory block of an information processing apparatus, wherein the grayscale reflection image or the grayscale interference image has a first image resolution, and inputting a grayscale fluorescent image of the biological sample into a second memory block of the information processing apparatus, wherein the grayscale fluorescent image has a second image resolution, and the first image resolution is equal to or different from the second image resolution; using the information processing apparatus to convert the grayscale reflection image or the grayscale interference image into an RGB reflection image or an RGB interference image by performing a first color transform operation, and using the information processing apparatus to convert the grayscale fluorescent image into an RGB fluorescent image by performing a second color transform operation; using the information processing apparatus to perform an image fusion operation and an intensity inversion operation on the RGB reflection image and the RGB fluorescent image or on the RGB interference image and the RGB fluorescent image to generate a pseudo H&E image; and outputting the pseudo H&E image to a display unit.

In an embodiment, the grayscale reflection image or the grayscale interference image presents a cytoplasmic image, and the grayscale fluorescent image presents an image of a nucleus.

In an embodiment, the grayscale fluorescent image of the nucleus is obtained by performing an image transform operation on the cytoplasmic image.

In an embodiment, the grayscale reflection image is produced by a direct reflection of a laser scanning confocal microscope.

In an embodiment, the grayscale interference image is produced by a reflection-and-interference function of an optical interferometric scanning microscope.

In an embodiment, an R value and a B value in the first color transform operation are set as 0, a G value is equal to a grayscale value of the grayscale reflection image or the grayscale interference image multiplied by a weighting value, and the weighting value is between 0.5 and 1.

In an embodiment, a G value in the second color transform operation is set as 255, a B value is set as 0, an R value is equal to a grayscale value of the grayscale fluorescent image multiplied by a weighting value, and the weighting value is between 0.5 and 1.

In an embodiment, the RGB reflection image or the RGB interference image is a dark green image with a black background, the RGB fluorescent image is a yellow-green image with a black background, and the pseudo H&E image is a fuchsia image with a white background.

In an embodiment, all R values, G values and B values of the RGB reflection image, the RGB interference image, and the RGB fluorescent image are each represented by n binary bits, where n is a positive integer multiple of 8.

In an embodiment, an optical system using the method for producing image of biological sample is proposed to support an in vivo detection operation or a review of a biobank.

To make it easier for our examiner to understand the objective of the invention, its structure, innovative features, and performance, we use preferred embodiments together with the accompanying drawings for the detailed description of the invention.

### BRIEF DESCRIPTION OF THE DRAWINGS

FIG. 1 illustrates a flow chart of method for producing image of biological sample according to a preferred embodiment of the present invention.
FIG. 2a illustrates a grayscale reflection image or a grayscale interference image of a biological sample according to a preferred embodiment of the present invention.
FIG. 2b illustrates a grayscale fluorescent image of a biological sample according to a preferred embodiment of the present invention
FIG. 2c illustrates an RGB reflection image or an RGB interference image derived by performing a first color transform operation on the image of FIG. 2a.
FIG. 2d illustrates an RGB fluorescent image derived by performing a second color transform operation on the image of FIG. 2b.
FIG. 2e illustrates an image derived by performing an image fusion operation on the image of FIG. 2c and the image of FIG. 2d.
FIG. 2f illustrates method for producing image of biological sample derived by performing an intensity inversion operation on the image of FIG. 2e.
FIG. 3 illustrates a block diagram of an optical system using a method for producing image of biological sample according to a preferred embodiment of the present invention.
FIG. 4 illustrates a block diagram of an optical system using a method for producing image of biological sample according to another preferred embodiment of the present invention.

### DETAILED DESCRIPTION OF THE PREFERRED EMBODIMENTS

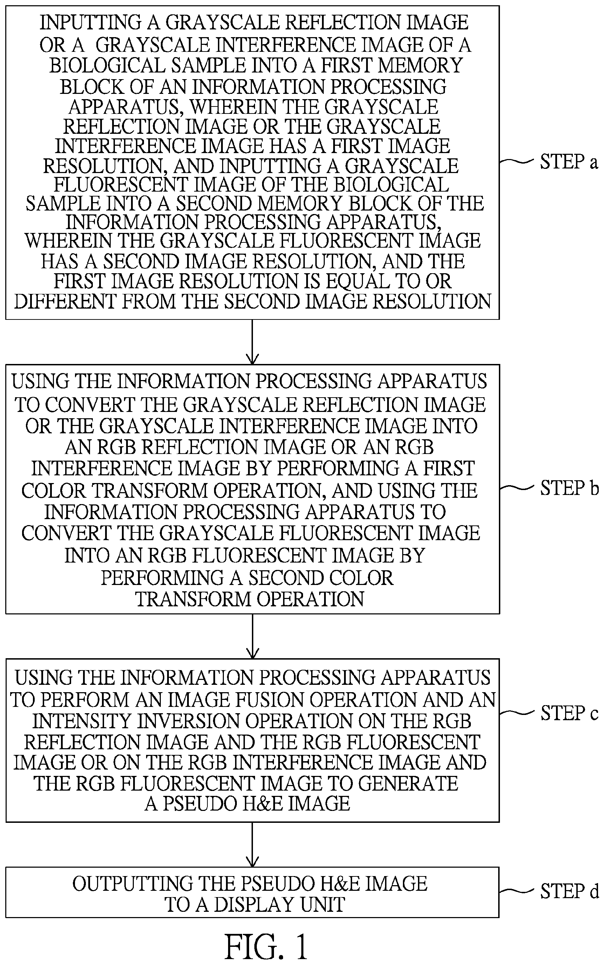

Please refer to FIG. 1, which illustrates a flow chart of method for producing image of biological sample according to a preferred embodiment of the present invention.

As FIG. 1 shows, the method for producing image of the biological sample of the present invention comprising steps of:
A method for producing image of a biological sample, comprising steps of: inputting a grayscale reflection image or a grayscale interference image of a biological sample into a first memory block of an information processing apparatus, wherein the grayscale reflection image or the grayscale interference image has a first image resolution, and inputting a grayscale fluorescent image of the biological sample into a second memory block of the information processing apparatus, wherein the grayscale fluorescent image has a second image resolution, and the first image resolution is equal to or different from the second image resolution (Step a); using the information processing apparatus to convert the grayscale reflection image or the grayscale interference image into an RGB reflection image or an RGB interference image by performing a first color transform operation, and using the information processing apparatus to convert the grayscale fluorescent image into an RGB fluorescent image by performing a second color transform operation (Step b); using the information processing apparatus to perform an image fusion operation and an intensity inversion operation on the RGB reflection image and the RGB fluorescent image or on the RGB interference image and the RGB fluorescent image to generate a pseudo H&E image (Step c); and outputting the pseudo H&E image to a display unit (Step d).

Fluorescence is a cold luminescence phenomenon resulting from an energy transform. Its characteristic is that after absorbing a short wavelength of light, a long wavelength of light is emitted. In the use of experimental techniques for fluorescence reactions, it brings considerable convenience to modern biotechnology. Fluorescent agents are often used as tracers of cell morphology. The principle is to use a short-wave beam to irradiate a sample of tissues contaminated with a fluorescent agent and to let a fluorescent light released and imaged on a photosensitive element (not shown in the figure). The conventional technology is not intended to be repeated here.

In traditional H&E staining scheme (H&E section), two dyes-hematoxylin and eosin are used to paint nucleus and cytoplasm with blue-purple color and pink color respectively. Then, based on the charge properties of the molecules combined with eosin, eosin interacts with different cellular components in tissues to produce a different shade of pink color.

In addition, in the process of cryosectioning, crystal ice produced after freezing samples with moisture will destroy the tissue structure. At the frozen temperature (∼-20°C) of general tissues, adipose tissues of with more fat samples have not been frozen so that they may fall off from the slice easily, making slice tissue identification incomplete. Simultaneously, after freezing, the cells are also not easily dyed and colored. These cause image artifacts inconsistent with fresh tissue structure. Therefore, other instruments for instant tissue detection in the use of optical principles are invented. The use of optical slicing can make the results of cell image interpretation quickly obtained without the needs of fixing tissues.

In the method for producing image of biological sample of the present invention, the image source is composed of a grayscale reflection image and a grayscale fluorescent image, where the grayscale reflection image presents a morphology image formed by the cytoplasm other than the nucleus of the biological sample, and the grayscale fluorescent image presents an area with dense DNA accumulation in the nucleus of the biological sample, i.e. presenting an image of a nucleus structure.

In another embodiment of the method for producing image of the biological sample of the present invention, the grayscale fluorescent image of the nucleus is obtained by performing an image transform operation on the cytoplasm image, where the image transform operation is to perform a grayscale inversion operation and a filtering operation in a hollow portion of the image of the cytoplasm. Because it is a conventional technology, no further description is intended here.

In optical sectioning, cytoplasmic and nuclear imaging corresponds to eosin and hematoxylin of the H&E staining scheme. When the nucleus is presented in a fluorescent image, the dyes used have membrane permeability, which can penetrate 100-200 microns deep below the surface layer in a short time, and at the same time, the dyes will not affect the subsequent tissues inspection process, so as to achieve the purpose of rapid inspection. It is a conventional technology, so no further description is intended here.

In the method for producing image of the biological sample of the present invention, the grayscale reflection image is produced by a direct reflection of a laser scanning confocal microscope (not shown in the figure). The imaging principle of the laser scanning confocal microscopy (LSCM) is using a laser source to replace one mercury lamp of the traditional fluorescent microscope, and using scanning mirrors to excite a fluorescent sample and garner emitted information thereof in a point by point manner. It is a conventional technology, so no further description is intended here.

In the method for producing image of the biological sample of the present invention, the grayscale interference image is produced by a reflection-and-interference function of an optical coherence tomography (not shown in the figure). The resolution of the optical coherence tomography (OCT) is higher than ultrasound, in which the sample is imaged and resolved based on the difference of reflection, absorption and scattering abilities of light in various tissues as well as principles of optical interference. It is a conventional technology, so no further description is intended here.

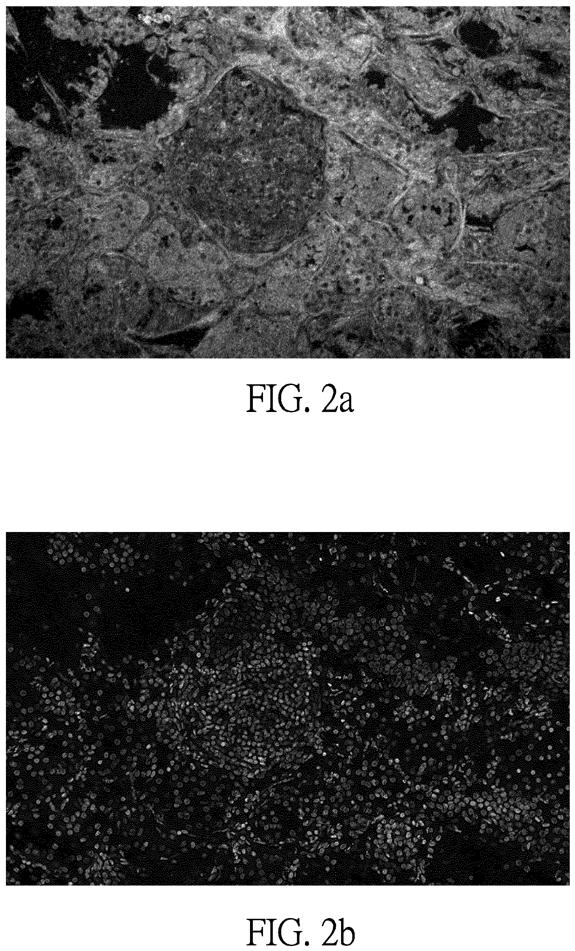

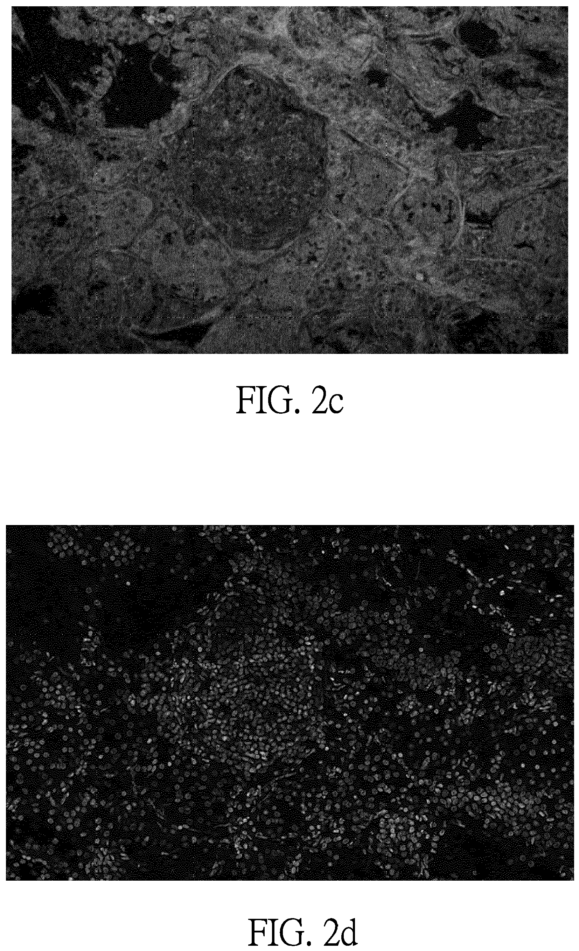

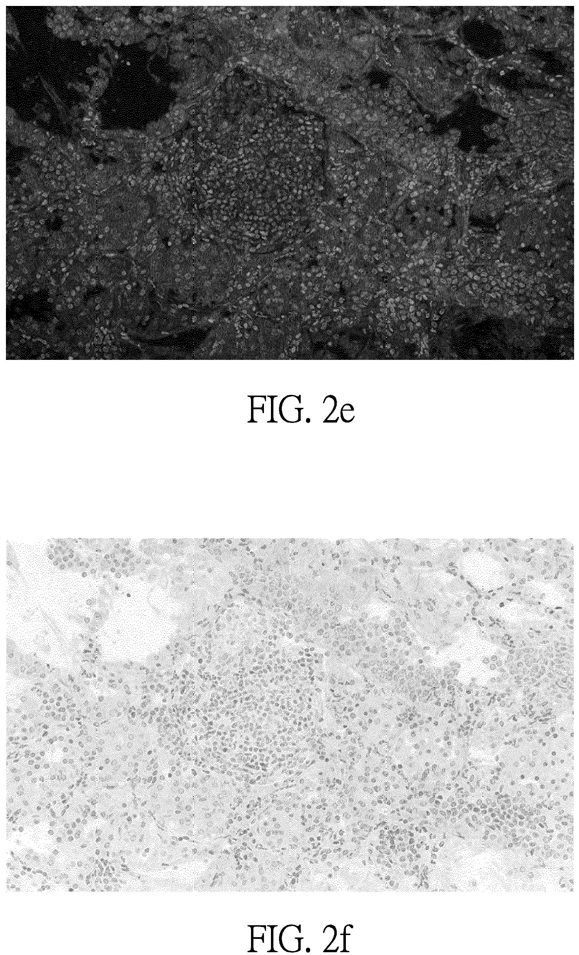

Please refer to FIG.s 2a to 2f, in which, FIG. 2a illustrates a grayscale reflection image or a grayscale interference image of a biological sample according to a preferred embodiment of the present invention; FIG. 2b illustrates a grayscale fluorescent image of a biological sample according to a preferred embodiment of the present invention; FIG. 2c illustrates an RGB reflection image or an RGB interference image derived by performing a first color transform operation on the image of FIG. 2a; FIG. 2d illustrates an RGB fluorescent image derived by performing a second color transform operation on the image of FIG. 2b; FIG. 2e illustrates an image derived by performing an image fusion operation on the image of FIG. 2c and the image of FIG. 2d; FIG. 2f illustrates method for producing image of biological sample derived by performing an intensity inversion operation on the image of FIG. 2e.

As shown in FIG. 2a, a grayscale reflection image or a grayscale interference image of a biological sample of the invention is input into a first memory blocks (not shown in the figure) of an information processing apparatus (not shown in the figure), in which the grayscale reflection image or the grayscale interference image is an image on a black background and the grayscale reflection image or the grayscale interference image has a first image resolution.

As shown in FIG. 2b, one grayscale fluorescent image of a biological sample of the invention is input into a second memory block (not shown in the figure) of the information processing apparatus (not shown in the figure), in which the grayscale fluorescent image is an image on a black background, the grayscale fluorescent image has a second image resolution and the first image resolution is equal to or different from the second image resolution.

As shown in FIG. 2c, in the use of the information processing apparatus (not shown in the figure), FIG. 2a is converted to an RGB reflection image or an RGB interference image by performing a first color transform operation, in which the RGB reflection image or the RGB interference image is a dark green image with a black background. In the first color transform operation, the R and B values are set as 0. The G value is equal to a grayscale value of the grayscale reflection image or the grayscale interference image multiplied by a weighting value, and the weighting value is between 0.5 and 1.

As shown in FIG. 2d, in the use of the information processing apparatus (not shown in the figure), FIG. 2b is converted to an RGB fluorescent image by performing a second color transform operation, in which the RGB fluorescent image is a yellow-green image with a black background. In the second color transform operation, the G value is set as 255, the B value is set as 0, the R value is equal to a grayscale value of the grayscale fluorescent image multiplied by a weighting value, and the weighting value is between 0.5 and 1.

As shown in FIG. 2e, in the use of the information processing apparatus (not shown in the figure), an image fusion operation result of the image of Fig. 2c (the image of Fig. 2c can be the RGB reflection image or the RGB interference image) and the RGB fluorescent image (Fig. 2d) is shown. It is an image on a black background.

As shown in FIG. 2f, in the use of the information processing apparatus (not shown in the figure), an intensity inversion operation is performed in FIG. 2e to produce a pseudo H&E image. It is fuchsia image with blue-violet color on a white background.

All R values, G values and B values of the RGB reflection image, the RGB interference image, and the RGB fluorescent image are each represented by n binary bits, where n is cited but not limited to a positive integer multiple of 8.

To convert optical slice image into H&E images using eosin and hematoxylin needs to convert a composite image of reflection and fluorescence into an absorption image similar to H&E, in which hematoxylin is to absorb white light and make blue-violet light penetrate, and eosin is to absorb white light and make fuchsia light penetrate. Compared with the following technical solutions:
(1) Converting a nuclear image of a grayscale format on a black background into a yellow-green RGB format on a black background and then inverting the color into a blue-violet RGB format on a white background;
(2) converting a cytoplasmic image of a grayscale format on a black background into a dark green RGB format on a black background and then inverting the color into a fuchsia RGB format on a white background,
(3) color-adding the above two images.

The image produced by this technical solution is through color addition of the nuclear image and the cytoplasmic image both with white background and nuclear imagery. Because the color is reversed first, color intensity is increased by 50% and the image is saturated, the contrast and the recognition degree of the image after color addition are not good. In the present invention, color addition and intensity reversal are performed in order on two nuclei with black background and nuclear imagery so that the resulting contrast of the pseudo H&E image produced is better.

In addition, the present invention also discloses an optical system using the method for producing image of the biological sample.

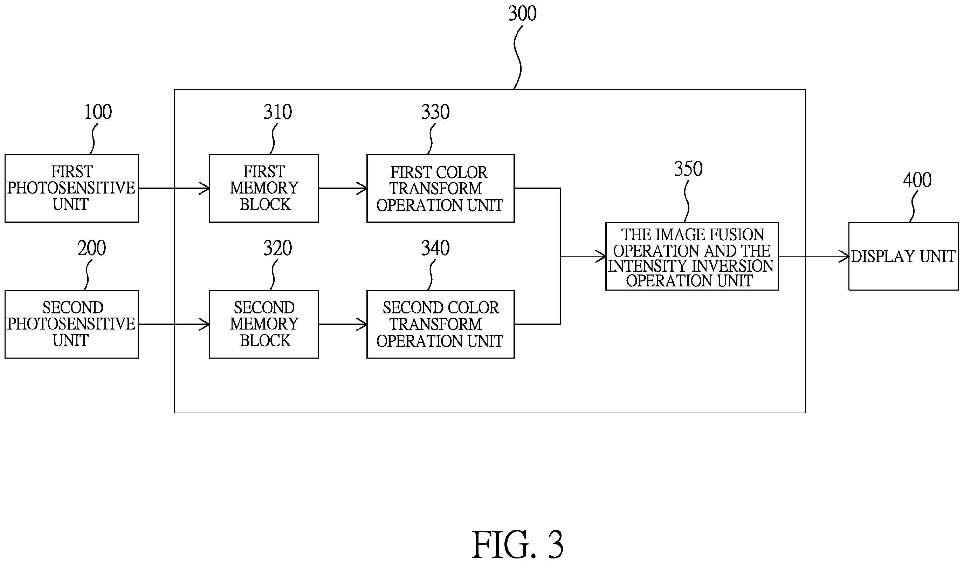

Please refer to FIG. 3, which FIG. 3 illustrates a block diagram of an optical system using a method for producing image of biological sample according to a preferred embodiment of the present invention.

As FIG. 3 shows, the optical system includes: a first photosensitive unit 100, a second photosensitive unit 200, an information processing apparatus 300, and a display unit 400.

The first photosensitive unit 100 is used to input a grayscale reflection image or a grayscale interference image of a biological sample. The grayscale reflection image or the grayscale interference image presents a cytoplasmic image. The grayscale reflection image is cited but not limited to the image produced by a direct reflection of a laser scanning confocal microscope (not shown in the figure). The grayscale interference image is cited but not limited to the image produced by a reflection-and-interference function of an optical interference scanning microscope (not shown in the figure).

The second photosensitive unit 200 is used to input a grayscale fluorescent image of a biological sample. The grayscale fluorescent image presents an image of a nucleus.

One end of the information processing apparatus 300 is separately coupled with the first photosensitive unit 100, and the second photosensitive unit 200 and has a first memory block 310 and a second memory block 320, in which the first memory block 310 is used to store the grayscale reflection image or the grayscale interference image input by the first photosensitive unit 100, and the second memory block 320 is used to store the grayscale fluorescent image input by the second photosensitive unit 200.

The information processing apparatus further has a first color transform operation unit 330, a second color transform operation unit 340, and an image fusion operation and an intensity inversion operation unit 350.

The first color transform operation unit 330 is coupled with the first memory block 310 to convert the grayscale reflection image or the grayscale interference image stored in the first memory block 310 into an RGB reflection image or an RGB interference image by performing a first color transform operation. In the first color transform operation, the R and B values are set as 0, the G value is equal to a grayscale value of the grayscale reflection image or the grayscale interference image multiplied by a weighting value, and the weighting value is between 0.5 and 1. The RGB reflection image or the RGB interference image is a dark green image with a black background.

The second color transform operation unit 340 is coupled with the second memory block 320 to convert the grayscale fluorescent image stored in the second memory block 320 into an RGB fluorescent image by performing a second color transform operation. In the second color transform operation, the G value is set as 255, the B value is set as 0, the R value is equal to a grayscale value of the grayscale fluorescent image multiplied by a weighting value, and the weighting value is between 0.5 and 1. The RGB fluorescent image is a yellow-green image with a black background.

All R values, G values and B values of the RGB reflection image, the RGB interference image, and the RGB fluorescent image are each represented by n binary bits, where n is a positive integer multiple of 8.

The image fusion operation and the intensity inversion operation unit 350 are coupled separately with the first color transform operation unit 330 and the second color transform operation unit 340 to perform an image fusion operation and an intensity inversion operation on the RGB reflection image and the RGB fluorescent image or on the RGB interference image and the RGB fluorescent image so as to produce a pseudo H&E image. The pseudo H&E image is a fuchsia image with a white background.

The display unit 400 is coupled with the other end of the information processing apparatus 300 to display the pseudo H&E image output from the information processing apparatus 300.

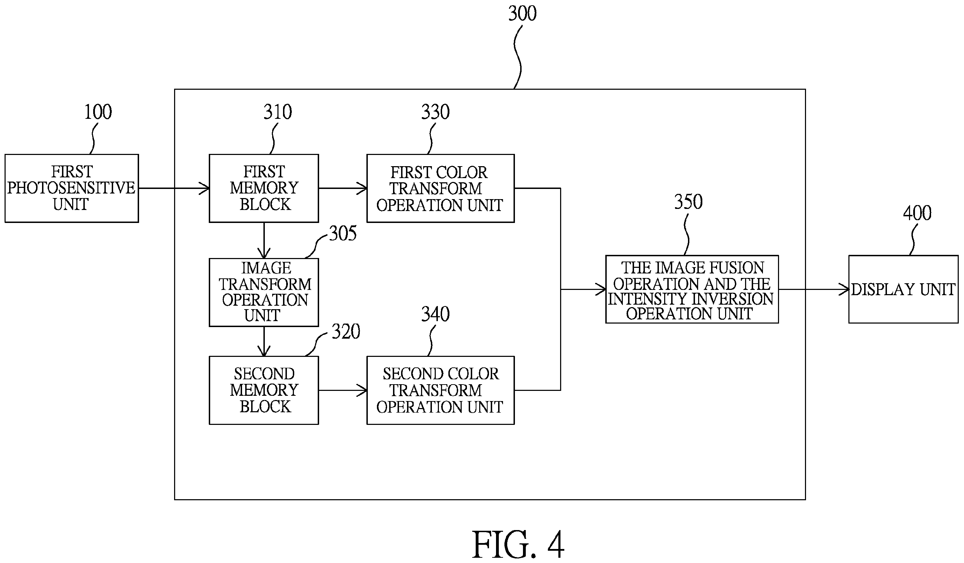

Please refer to FIG. 4, which FIG. 4 illustrates a block diagram of an optical system using a method for producing image of biological sample according to another preferred embodiment of the present invention.

As FIG. 4 shows, the optical system includes: a first photosensitive unit 100, an information processing apparatus 300, and a display unit 400.

The first photosensitive unit 100 is used to input a grayscale reflection image or a grayscale interference image of a biological sample. The grayscale reflection image or the grayscale interference image presents a cytoplasmic image. The grayscale reflection image is cited but not limited to the image produced by a direct reflection in a laser scanning confocal microscope (not shown in the figure). The grayscale interference image is cited but not limited to a reflection-and-interference function of an optical interferometric scanning microscope (not shown in the figure).

One end of the information processing apparatus 300 is coupled with the first photosensitive unit 100 and has a first memory block 310, an image transform operation unit 305, and a second memory block 320. The memory block 310 is used to store the grayscale reflection image or the grayscale interference image input from the first photosensitive unit 100. The image transform operation unit 305 is coupled with the first memory block 310 to convert the grayscale reflection image or the grayscale interference image stored in the first memory block 310 into a grayscale image of a nucleus by performing an image transform operation. The second memory block 320 is used to store the grayscale nuclear image input from the image transform operation unit 305.

The information processing apparatus 300 further has a first color transform operation unit 330, a second color transform operation unit 340, an image fusion operation and intensity inversion operation unit 350.

The first color transform operation unit 330 is coupled with the first memory block 310 to convert the grayscale reflection image or the grayscale interference image stored in the first memory block 310 into an RGB reflection image or an RGB interference image by performing a first color transform operation. In the first color transform operation, the R value and the B value are set as 0, the G value is equal to a grayscale value of the grayscale reflection image or the grayscale interference image multiplied by a weighting value, and the weighting value is between 0.5 and 1. The RGB reflection image or the RGB interference image is a dark green image with a black background.

The second color transform operation unit 340 is coupled with the second memory block 320 to convert the grayscale nuclear image stored in the second memory block 320 into an RGB nuclear image by performing a second color transform operation. In the second color transform operation, the G value is set as 255, the B value is set as 0, the R value is equal to a grayscale value of the grayscale nuclear image multiplied by a weighting value, and the weighting value is between 0.5 and 1. The RGB nuclear image is a yellow-green image with a black background.

All R values, G values and B values of the RGB reflection image, the RGB interference image, and the RGB fluorescent image are each represented by n binary bits, where n is a positive integer multiple of 8.

The image fusion operation and the intensity inversion operation unit 350 are coupled separately with the first color transform operation unit 330 and the second color transform operation unit 340 to perform an image fusion operation and an intensity inversion operation on the RGB reflection image and the RGB fluorescent image or on the RGB interference image and the RGB fluorescent image to produce a pseudo H&E image. The pseudo H&E image is a fuchsia image with a white background.

The display unit 400 is coupled with the other end of the information processing apparatus 300 to display the pseudo H&E image output from the information processing apparatus 300.

The optical sectioning system of the present invention can support an in vivo detection operation or a review of the biobank. When the optical sectioning system of the present invention is applied to in vivo detection, a light probe is made deep into the preoperative (such as skin) or intraoperative (such as breast tumor clearance surgery) in vivo surface to obtain cytoplasmic image of interference or reflection. Then, this image is inverted and filtered to produce a nuclear image. After the fusion of the above methods, the pseudo H&E image in in vivo tissues can be obtained. And when the optical slicing system of the present invention is applied to the review of the biobank, the optical probe is made deep down to one fresh tissue of the biobank on the sample stage to perform a large area scan. Then, the aforementioned image processing procedure is executed to obtain the pseudo H&E image. In addition, the nuclear image of fresh tissues of the biological sample in the sample stage can also be obtained by fluorescent means.

With the design disclosed above, the present invention has the following advantages:
1. The invention discloses a method for producing image of biological sample, in which a reflection image and a fluorescent image (nuclear image), or an interference image and a fluorescent image (nuclear image) are generated by performing color transform operations, image fusion operations and intensity inversion operations to provide a better contrast of biological samples and thus improve image identifiability and readability.
2. The invention discloses a method for producing image of a biological sample, which can reduce more use of fluorescent agents and the damage caused by the fluorescent agent on the sample tissues compared to conventional technology in the use of multiple fluorescence image additions.
3. The invention discloses a method for producing image of a biological sample, which can shorten the dyeing time and thus speed up the acquisition of images due to the reduction in the use of fluorescent agents.
4. The invention discloses a method for producing image of a biological sample, in which instant images can be obtained without destroying the tissues by using image detection for in vivo tissues.
5. The present invention discloses a method for producing image of a biological sample, which can improve the correctness of the sample before it is put into storage by first confirming if target tissues or cells are included in test tissues in fresh tissues image recognition in the biobank and also avoid sample freezing and reduce the risk of defective product output after delivery.

While the invention has been described by way of example and in terms of preferred embodiments, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

In summation of the above description, the present invention herein enhances the performance over the conventional structure and further complies with the patent application requirements and is submitted to the Patent and Trademark Office for review and granting of the commensurate patent rights.

## Claims

1. A method for producing image of biological sample, comprising steps of:
inputting a grayscale reflection image or a grayscale interference image of a biological sample into a first memory block (310) of an information processing apparatus (300), wherein the grayscale reflection image or the grayscale interference image has a first image resolution, and inputting a grayscale fluorescent image of the biological sample into a second memory block (320) of the information processing apparatus (300), wherein the grayscale fluorescent image has a second image resolution, and the first image resolution is equal to or different from the second image resolution;
using the information processing apparatus (300) to convert the grayscale reflection image or the grayscale interference image into an RGB reflection image or an RGB interference image by performing a first color transform operation, and using the information processing apparatus (300) to convert the grayscale fluorescent image into an RGB fluorescent image by performing a second color transform operation;
using the information processing apparatus (300) to perform an image fusion operation and an intensity inversion operation on the RGB reflection image and the RGB fluorescent image or on the RGB interference image and the RGB fluorescent image to generate a pseudo H&E image; and
outputting the pseudo H&E image to a display unit (400).

2. The method for producing image of biological sample as claimed in claim 1, wherein the grayscale reflection image or the grayscale interference image presents a cytoplasmic image, and the grayscale fluorescent image presents an image of a nucleus.

3. The method for producing image of biological sample as claimed in claim 2, wherein the grayscale fluorescent image of the nucleus is obtained by performing an image transform operation on the cytoplasm image.

4. The method for producing image of biological sample as claimed in any one of claims 1 to 3, wherein the grayscale reflection image is produced by a direct reflection of a laser scanning confocal microscope.

5. The method for producing image of biological sample as claimed in any one of claims 1 to 3, wherein the grayscale interference image is produced by a reflection-and-interference function of an optical interferometric scanning microscope.

6. The method for producing image of biological sample as claimed in any one of claims 1 to 5, wherein an R value and a B value in the first color transform operation are set as 0, a G value is equal to a grayscale value of the grayscale reflection image or the grayscale interference image multiplied by a weighting value, and the weighting value is between 0.5 and 1.

7. The method for producing image of biological sample as claimed in any one of claims 1 to 6, wherein a G value in the second color transform operation is set as 255, a B value is set as 0, an R value is equal to a grayscale value of the grayscale fluorescent image multiplied by a weighting value, and the weighting value is between 0.5 and 1.

8. The method for producing image of biological sample as claimed in any one of claims 1 to 7, wherein the RGB reflection image or the RGB interference image is a dark green image with a black background, the RGB fluorescent image is a yellow-green image with a black background, and the pseudo H&E image is a fuchsia image with a white background.

9. The method for producing image of biological sample as claimed in any one of claims 1 to 8, wherein all R values, G values and B values of the RGB reflection image, the RGB interference image, and the RGB fluorescent image are each represented by n binary bits, where n is a positive integer multiple of 8.

10. An optical system, using the method for producing image of biological sample as claimed in any one or more of claims 1 to 9 to support an in vivo detection operation or a review of a biobank.
